# FASCICULE DE BREVET EUROPEEN

(11) **EP 0 552 121 B1**
(45) Date de publication et mention de la délivrance du brevet: **19.12.2001**
(21) Numéro de dépôt: 93460001.6
(22) Date de dépôt: 06.01.1993
(51) Int. Cl.: H04L 12/56, H04Q 11/04

(54) **Méthode de contrôle de débit de cellules**
Verfahren zur Zellenflusssteuerung
Method for cell flow control

(30) Priorité: 14.01.1992 FR 9200430
(43) Date de publication de la demande: 21.07.1993
(60) Demande divisionnaire: 99123092.1
(73) Titulaire: FRANCE TELECOM, 75015 Paris (FR)
(72) Inventeur: Boyer, Pierre, F-22300 Lannion (FR); Guillemin, Fabrice, F-22700 Ploumanach (FR); Servel, Michel, F-22300 Lannion (FR)
(74) Mandataire: Maillet, Alain

(56) Documents cités:
- EP-A- 0 171 596
- EP-A- 0 438 009
- GB-A- 1 427 319
- INT. SWITCHING SYMPOSIUM 90 vol. 5, Mai 1990, SE pages 127 - 130 , XP130936 E. RATHGEB ET AL
- IEEE INFOCOM 92 vol. 2, Août 1992, IT pages 753 - 758 , XP300210 F. GUILLEMIN ET AL
- COMPUTER COMMUNICATION REVIEW vol. 20, no. 4, Septembre 1990, US pages 19 - 29 , XP168038 L. ZHANG
- IEEE JOURNAL ON SELECTED AREAS IN COMMUNICATIONS vol. 5, no. 8, Octobre 1987, US pages 1315 - 1326 M. KATEVENIS

## Description

La présente invention concerne une méthode de contrôle de débit de cellules présentes sur un circuit virtuel d'un multiplex temporel asynchrone, et un circuit de mise en oeuvre de cette méthode.

L'acheminement de débits quelconques et le partage des mêmes ressources de transmission constituent l'intérêt principal de la commutation temporelle asynchrone. En effet, le multiplexage temporel asynchrone permet de transmettre sur un même support, c'est-à-dire sur un même multiplex temporel asynchrone, des cellules appartenant à des circuits virtuels différents. Toutefois, l'allocation des ressources s'appuie généralement sur des calculs statistiques des taux d'activité des différentes sources émettrices si bien qu'il y a un risque non nul de pertes d'informations par débordement des files d'attente dû à des surcharges instantanées. Il faut évidemment minimiser ces pertes.

Une méthode de contrôle de débits crête ou moyen des cellules présentes sur un circuit virtuel est décrite dans le document de brevet FR-A-2 616 024. Elle consiste à prévoir l'élimination des cellules qui appartiennent à une communication et qui sont en trop par rapport au débit seuil maximal admissible du circuit virtuel correspondant. Ce débit maximum est déterminé, pour chaque circuit virtuel, par l'allocation d'une fréquence d'horloge prédéterminée et d'une valeur de seuil prédéterminée. La mesure consiste à calculer la différence entre le nombre de cellules entrantes appartenant à ce circuit virtuel et le nombre d'impulsions délivrées par l'horloge. On provoque l'élimination des cellules entrantes tant que la différence calculée n'est pas inférieure à la valeur seuil prédéterminée.

Le choix entre plusieurs valeurs de débit seuil pour des circuits virtuels différents est fait par le choix de plusieurs bases de temps, ce qui constitue un inconvénient du fait du manque de souplesse que cela implique.

Par ailleurs, on conçoit que si la base de temps sélectionnée pour un circuit virtuel déterminé passe par zéro entre les arrivées de deux cellules consécutives de ce circuit, la différence entre les deux valeurs correspondantes de la base de temps n'est plus représentative du nombre d'impulsions d'horloge et la mesure du débit est entachée d'une erreur. Pour résoudre ce problème, on surdimensionne généralement le nombre de bits des bases de temps, par exemple quarante ou cinquante bits, si bien que l'évènement considéré devient rare.

Cette méthode demande, par conséquent, pour sa mise en oeuvre, une circuiterie importante.

On connaît également le document de brevet FR-A-2 616 025 qui décrit une méthode de contrôle de flux de cellules sur le circuit virtuel d'un multiplex temporel asynchrone. Cette méthode se distingue de celle décrite précédemment en ce que, lorsqu'une cellule arrive, le débit du circuit virtuel correspondant est comparé à un valeur moyenne allouée et, quand il est trouvé positif, l'écart positif se traduit en droits à émettre proportionnels au temps écoulé depuis la demande précédente, ces droits étant cumulés et, quand il est trouvé négatif, il entraîne la décrémentation du nombre cumulé et, si le nombre cumulé est nul, le refus d'autorisation d'émettre.

Si cette méthode résout bien le problème de l'allocation d'un débit prédéterminé pour un circuit virtuel donné, elle présente l'inconvénient de présenter une réponse relativement lente si bien qu'elle est essentiellement destinée au contrôle de débits moyens et qu'elle n'est pas du tout appropriée au contrôle des débits crête.

On connaît également le document de brevet FR-A-2 657 482 qui concerne, cette fois-ci, essentiellement une méthode de lissage et de contrôle de débits de communications temporelles asynchrones en gérant, notamment, la durée entre deux cellules consécutives d'un circuit virtuel. Cette méthode consiste à déterminer l'heure réelle de réémission en fonction d'une période de temps minimale théorique séparant deux cellules consécutives d'un même circuit virtuel, et à ranger ladite cellule entrante dans une mémoire à l'adresse formée à partir de cette heure de réémission. Le contrôle de débit est effectué en comparant le nombre de cellules en attente à un nombre maximum prédéterminé pour le circuit virtuel correspondant. Toute cellule en trop est détruite.

Ce dispositif ne présente pas d'inconvénients majeurs si non de regrouper les fonctions de contrôle de débits des cellules et celles de gestion de l'espace de temps séparant deux cellules consécutives appartenant à un même circuit virtuel lorsque celles-ci sont trop rapprochées.

Pour essentiellement des raisons de souplesse d'installation des systèmes, il est préférable de découpler ces fonctions et de les prévoir, l'une ou l'autre, en des emplacements différents dans le réseau.

En conséquence, un but de l'invention est de prévoir une méthode de contrôle de débit qui n'assure pas nécessairement la gestion de l'espace de temps entre cellules et qui ne présente pas les inconvénients des méthodes de contrôle qui sont mentionnées ci-dessus.

A cet effet, une méthode de contrôle de débit selon l'invention est caractérisée en ce qu'on affecte à chaque circuit virtuel une période correspondant à la période minimale théorique entre deux cellules consécutives dudit circuit virtuel et un délai maximal, on mémorise l'heure fictive d'émission sur le multiplex de sortie de la dernière cellule appartenant à chaque circuit virtuel, et on compare, à l'arrivée d'une nouvelle cellule d'un circuit virtuel, une heure seuil calculée par addition de son heure réelle d'arrivée et dudit délai à l'heure fictive d'émission espérée de ladite nouvelle cellule, ladite heure fictive étant calculée par addition de ladite heure fictive d'émission de la dernière cellule émise et de ladite période minimale, et si le résultat de cette comparaison montre que ladite heure seuil est antérieure à ladite heure fictive d'émission espérée, ladite cellule entrante n'est pas réémise sur le multiplex de sortie alors que s'il montre que ladite heure seuil est postérieure à l'heure fictive d'émission espérée, elle est émise sur le multiplex de sortie, l'heure fictive d'émission de ladite cellule entrante étant alors calculée puis mémorisée en relation avec le circuit virtuel auquel appartient ladite cellule entrante.

Selon une autre caractéristique de l'invention, l'heure fictive d'émission de la cellule entrante qui est calculée est l'heure réelle d'arrivée si ladite heure d'arrivée est postérieure à ladite heure fictive d'émission espérée.

Selon une autre caractéristique de l'invention, l'heure fictive d'émission de la cellule entrante qui est calculée est soit l'heure fictive d'émission de la cellule précédente si ladite heure seuil est antérieure à ladite heure fictive d'émission espérée, soit ladite heure fictive d'émission si l'heure seuil est postérieure à ladite heure fictive d'émission.

Selon une autre caractéristique de l'invention, on affecte, à chaque circuit virtuel, un bit dont la valeur est à un lorsque l'heure fictive d'émission mémorisée pour ledit circuit virtuel est antérieure d'une durée de temps prédéterminée à l'heure réelle et, à zéro, dans le cas contraire.

La présente invention concerne également un circuit de contrôle de débit de cellules d'un circuit virtuel destiné à la mise en oeuvre d'une méthode telle que celle qui vient d'être décrite.

Selon une caractéristique, ledit circuit comprend un multiplex d'entrée et un multiplex de sortie et il est caractérisé en ce qu'il comprend encore une mémoire comportant une zone de mémorisation par circuit virtuel, chaque zone étant divisée en sections dans lesquelles sont respectivement mémorisées l'heure fictive d'émission de la dernière cellule émise, la période minimale et la durée maximale de retard du circuit virtuel correspondant, ladite mémoire étant adressée, à l'arrivée d'une cellule entrante sur le multiplex d'entrée, par le numéro du circuit virtuel auquel appartient ladite cellule entrante, une porte dont l'entrée est reliée au multiplex d'entrée et dont la sortie est reliée au multiplex de sortie, une unité de calcul comportant des entrées respectivement reliées aux sorties de lecture de la mémoire pout y lire chaque section de la zone adressée, une première sortie reliée à une entrée de commande de la porte pour autoriser ou non l'émission sur le multiplex de sortie de la cellule présente sur le multiplex d'entrée, et une seconde sortie reliée à une entrée d'écriture de la mémoire pour mémoriser dans la section de la zone adressée l'heure fictive d'émission de la cellule entrante calculée par ladite unité de calcul, une base de temps dont la sortie est reliée à l'entrée correspondante de l'unité de calcul, ladite unité, en fonction de l'heure locale délivrée par ladite base de temps, de l'heure fictive d'émission, de la période minimale et de la durée maximale respectivement mémorisées dans les sections correspondantes de la zone mémoire qui est adressée par la cellule entrante délivrant un signal sur l'entrée de commande de la porte pour commander ou non l'émission sur le multiplex de sortie de ladite cellule et calculant l'heure fictive d'émission de ladite cellule entrante pour la mémoriser dans la section correspondante de la zone adressée par ladite cellule.

Selon une autre caractéristique de l'invention, ladite unité de calcul comprend un additionneur dont une première entrée et une seconde entrée reçoivent respectivement le signal d'heure fictive d'émission de la dernière cellule émise et le signal de période minimale délivrés par la mémoire adressée par le numéro de circuit virtuel de la cellule entrante, la sortie dudit additionneur étant reliée à une première entrée d'un comparateur dont la seconde entrée reçoit le signal d'heure seuil de la cellule entrante, la sortie du comparateur étant reliée, d'une part, à la borne de l'unité de calcul qui est elle-même reliée à l'entrée de commande de la porte et, d'autre part, à l'entrée de commande d'un multiplexeur dont les entrées reçoivent respectivement le signal d'heure fictive d'émission de la dernière cellule émise délivrée par la mémoire et le signal délivré par ledit additionneur, la sortie dudit multiplexeur étant reliée à la borne de l'unité de calcul elle-même reliée à l'entrée d'écriture de la mémoire pour la mémorisation de l'heure fictive d'émission de la cellule entrante.

Selon une autre caractéristique de l'invention, pour calculer l'heure seuil d'arrivée de la cellule entrante, l'unité de calcul comporte encore un second additionneur dont les deux entrées reçoivent respectivement le signal d'heure locale délivrée par la base de temps et le signal de délai maximal délivré par la mémoire, la sortie dudit additionneur délivrant ledit signal d'heure seuil.

Selon une autre caractéristique de l'invention, ladite unité de calcul comporte encore un second comparateur dont une première entrée est reliée à la sortie du premier additionneur et la seconde entrée à la base de temps pour y recevoir le signal d'heure locale, la sortie dudit comparateur étant reliée à l'entrée de commande d'un second multiplexeur dont les deux entrées sont respectivement reliées à la sortie du premier multiplexeur et à la sortie de la base de temps pour y recevoir le signal d'heure locale, la sortie dudit multiplexeur formant alors la sortie de l'unité de calcul.

Selon une autre caractéristique de l'invention, chaque comparateur a ses entrées qui sont respectivement reliées aux sorties d'un circuit d'analyse dont les entrées correspondantes reçoivent les signaux à comparer, ledit circuit inversant le bit de poids le plus fort de chacun des signaux présents sur son entrée lorsqu'un seul desdits signaux est passé par zéro et que l'autre se trouve à une distance prédéterminée du premier.

Selon une autre caractéristique de l'invention, l'unité de calcul comporte encore une entrée pour y recevoir un signal d'activation délivré par un processeur aux temps où il adresse lui-même ladite mémoire et une sortie sur laquelle elle délivre un bit dont la valeur est à un lorsque l'heure fictive d'émission de la dernière cellule émise mémorisée est antérieure d'une durée de temps prédéterminée à l'heure réelle et à zéro dans le cas contraire, ladite sortie étant reliée à une entrée de mémorisation de la mémoire pour pouvoir mémoriser ledit bit dans une section de la zone adressée, la mémoire ayant une sortie de lecture pour pouvoir délivrer, à l'arrivée d'une cellule, ledit bit mémorisé dans la section de la zone adressée par ladite cellule et pour le fournir à une entrée correspondante de l'unité de calcul, ladite unité de calcul délivrant en tant qu'heure fictive d'émission de ladite cellule entrante, ladite heure fictive normalement calculée si le bit mémorisé dans la zone adressée par la cellule entrante est à zéro, et l'heure locale s'il est à un.

Selon une autre caractéristique de l'invention, ledit bit est fourni à une entrée d'une porte OU dont la seconde entrée est reliée à la sortie du second comparateur, la sortie de ladite porte étant reliée à l'entrée de commande du second multiplexeur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est un schéma synoptique d'un circuit de contrôle de débit selon la présente invention,
la Fig. 2 est un schéma synoptique de l'unité de calcul d'un circuit de contrôle selon la présente invention,
la Fig. 3 est un diagramme montrant le résultat de la méthode de contrôle selon l'invention et le fonctionnement d'un circuit de contrôle selon l'invention,
la Fig. 4a est un schéma synoptique d'un circuit d'analyse équipant une unité de calcul d'un circuit de contrôle selon l'invention,
la Fig. 4b est une table de vérité d'un circuit de comparaison équipant un circuit d'analyse selon la Fig. 4a, et
la Fig. 5 est une table de vérité de fonctionnement du circuit d'analyse de péremption qui équipe un circuit de contrôle selon l'invention.

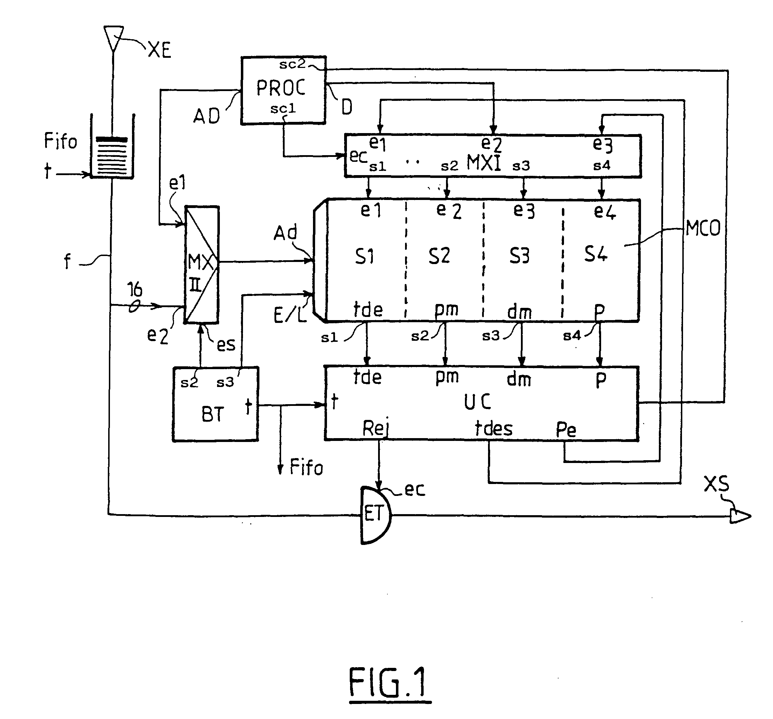

Le dispositif de contrôle de débit représenté à la Fig. 1 comprend essentiellement une file d'entrée Fifo, une mémoire MCO dite mémoire de contexte, une unité de calcul UC, une base de temps BT et un multiplexeur MXI.

La file Fifo reçoit sur son entrée un multiplex rentrant XE qui est, par exemple, un multiplex temporel asynchrone du type de celui qui est décrit dans le document de brevet EP-A-108 028. Chaque cellule délivrée à la sortie de la file Fifo, appelée par la suite cellule entrante, est présentée sur un faisceau de fils f dont un certain nombre, par exemple seize, porte les bits représentatifs du numéro du circuit virtuel de la cellule entrante. Le faisceau de fils f à la sortie de la file Fifo est relié à une porte ET au nombre d'entrées correspondant au nombre de fils du faisceau f. La sortie de la porte ET est reliée à un multiplex sortant XS. Elle comporte également une entrée de commande ec, du type inverseuse, reliée, comme on le verra par la suite, à une sortie Rej de l'unité de calcul UC.

Lorsque la porte ET reçoit un niveau un sur son entrée ec, ses sorties sont à un niveau zéro, alors que lorsqu'elle reçoit un niveau zéro, ses entrées sont recopiées sur ses sorties. On dira, par la suite, que la cellule entrante est, dans ce dernier cas, émise sur le multiplex de sortie XS.

La mémoire MCO est une mémoire vive à accès aléatoire comportant autant de zones adressables que de circuits virtuels que peut traiter le système.

Chaque zone de la mémoire MCO est divisée en quatre sections S₁ à S₄ respectivement destinées à mémoriser, pour chaque zone et donc pour chaque numéro de circuit virtuel:
- l'heure d'émission fictive de la dernière cellule arrivée tde,
- une période de temps théorique pm correspondant à la période minimale qui doit séparée deux cellules du circuit virtuel sur le multiplex XS pour que le débit de cellules du circuit virtuel concerné soit toujours inférieur au débit prédéterminé de ce circuit,
- un délai maximum dm correspondant au temps de retard maximum que peut prendre, dans le réseau, une cellule d'un circuit virtuel en fonctionnement normal, et
- un bit P dit de péremption dont la fonction est explicitée ci-dessous.

La durée dm correspond au temps de retard maximum autorisé que peut prendre, dans le réseau, une cellule d'un circuit virtuel. Le délai dm peut fort bien être très inférieur à la période pm. En effet, pour une cellule de parole, la période pm est, par exemple, d'environ six millisecondes alors que le temps de retard de certains réseaux du type temporel asynchrone est de l'ordre de quelques centaines de microsecondes. Le délai maximum dm est évalué par rapport à l'arrivée dans le dispositif de contrôle de la cellule la plus rapide dans le réseau. Ce délai maximum dm peut varier en fonction d'éventuelles priorités entre les cellules appartenant à des circuits virtuels différents.

Notons que, si l'on considère un délai dm identique pour tous les circuits virtuels, cette valeur peut être directement fournie à l'unité de calcul UC et la section correspondante S₃ de la mémoire MCO n'existe pas.

L'heure fictive d'émission tde est avantageusement codée en trois champs respectivement de 8 bits, 16 bits et 8 bits. Le premier correspond aux bits de poids faibles et peut être considéré comme la partie "décimale". Le second est d'une dimension telle qu'il est possible d'y coder la valeur maximale au delà de laquelle une cellule n'est pas réémise, quelque soit le numéro de circuit virtuel. Le troisième peut être considéré comme les bits de poids forts. Il permet de repérer les évènements à longs termes et de coder les périodes de valeur supérieure au retard maximum que peut prendre une cellule dans le réseau.

La période pm est elle codée sur 30 bits dont 22 bits de poids forts servant à exprimer la période minimale entre deux cellules à émettre et 8 bits de poids faibles servant à affiner la distance temporelle moyenne entre l'émission de deux cellules consécutives.

Le délai dm est lui codé sur 24 bits comme les heures mais sans le champ décimal de 8 bits.

La mémoire MCO comporte une entrée d'adressage Ad pour sélectionner une zone et une entrée de sélection de mode écriture/lecture E/L.

L'entrée d'adressage Ad est reliée à la sortie d'un multiplexeur à deux entrées MXII dont l'une e₁ est reliée au bus d'adressage AD d'un processeur PROC et l'autre e₂ aux fils du faisceau f qui portent le numéro d'ordre du circuit de la cellule entrante.

La mémoire MCO comporte encore quatre entrées e₁ à e₄ sur lesquelles sont appliqués les signaux tde, pm, dm et P pour leur enregistrement, en mode écriture, dans les sections correspondantes de la zone adressée.

Elle comporte encore quatre sorties s₁ à s₄ sur lesquelles elle délivre, en mode lecture, les signaux tde, pm, dm et P issus des sections correspondantes S₁ à à S₄ de la zone dont l'adresse est présente sur Ad.

La base de temps BT comporte une première sortie t par laquelle elle fournit, à l'unité de calcul UC et à la file Fifo, un signal t représentant l'heure réelle locale.

La file Fifo délivre les cellules sur sa sortie en synchronisme avec le signal t.

Le signal t est codé sur vingt quatre bits et ne comporte pas de bits de décimales.

La base de temps BT comporte une seconde sortie s₂ reliée à l'entrée de sélection es d'entrée du multiplexeur MXII et une troisième sortie s₃ reliée à l'entrée de commande E/L de la mémoire. MCO.

Chaque temps élémentaire t est divisé en quatre parties, notées ci-après t₁, t₂, t₃ et t₄. Pendant les temps t₁ et t₂, la seconde sortie s₂ de la base de temps BT est à un niveau tel que le multiplexeur MXII a sa sortie qui porte le numéro du circuit virtuel qui est présent sur son entrée e₂ alors que, pendant les temps t₃ et t₄, elle est à niveau tel qu'il a sa sortie qui porte l'adresse que lui fournit sur son entrée e₁, le processeur PROC.

Pendant les temps t₁ et t₃, la base de temps BT a sa troisième sortie s₃ qui délivre, à la mémoire MCO, un signal de commande du mode lecture alors que pendant les temps t₂ et t₄, elle lui délivre un signal de commande du mode écriture le dernier mode est actif seulement si une cellule entrante est présente ou si le processeur adresse la mémoire.

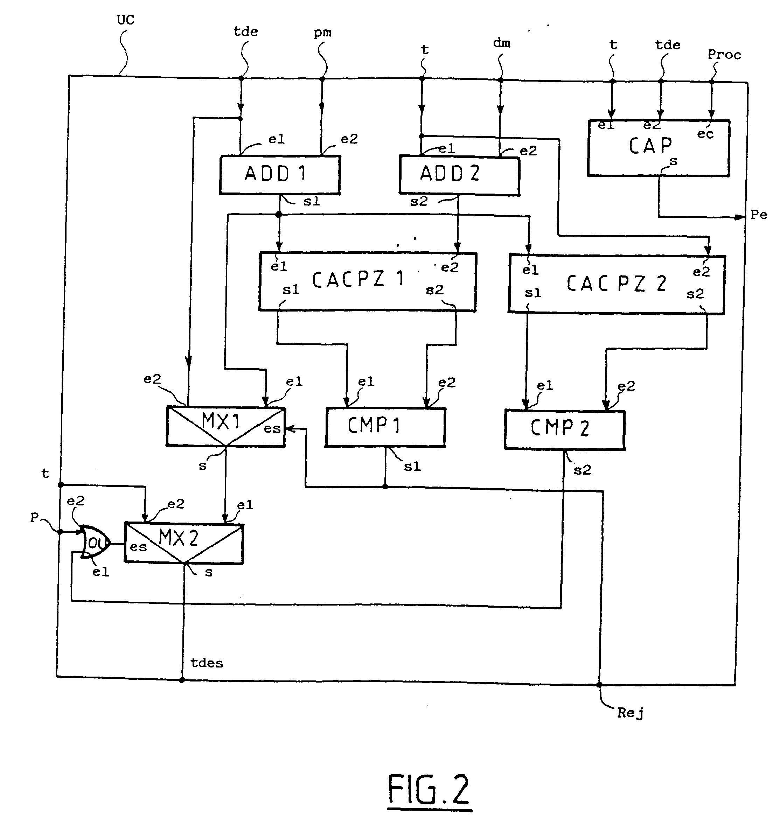

L'unité de calcul UC possède quatre entrées tde, pm, dm, P ayant les mêmes références que les signaux qu'elles portent respectivement reliées aux quatre sorties s₁ à s₄ de la mémoire MCO sur lesquelles sont respectivement présents, lorsque la mémoire MCO est adressée en mode lecture, les valeurs tde, pm, dm, et P de la zone adressée. L'unité de calcul UC possède également une sortie tdes sur laquelle elle délivre un signal tdes représentant l'heure d'émission fictive de la cellule traitée et une sortie Rej sur laquelle elle délivre un signal Rej de commande de rejet ou non de la cellule traitée. Les sorties Rej et tdes sont respectivement reliées à l'entrée de commande ec de la porte ET, comme cela a déjà été décrit, et à une entrée e₁ de multiplexeur MXI. Elle possède encore une sortie Pe sur laquelle elle délivre un bit P dit de péremption dont la fonction est décrite ci-dessous. La sortie Pe est reliée à une entrée e₃ correspondante du multiplexeur MXI. L'unité de calcul UC est décrite plus en détail ci-dessous en relation avec la Fig. 2.

Le multiplexeur MXI possède quatre sorties s₁ à s₄ respectivement reliées aux entrées e₁ à e₄ de la mémoire MCO. Celle-ci étant adressée en mode écriture, les signaux sur les sorties s₁ à s₄ du multiplexeur MXI sont enregistrés, dans les sections correspondantes de la zone adressée.

Le multiplexeur MXI possède encore une troisième entrée e₂ qui est reliée à un bus D du processeur PROC pour pouvoir initialiser les valeurs de pm et de dm de chaque circuit virtuel, et une entrée de commande ec qui est reliée à une sortie de commande sc₁ du processeur PROC.

Le fonctionnement du dispositif de contrôle représenté à la Fig. 1 est le suivant.

A sa mise sous tension ou à l'établissement ou à la rupture de communications, le processeur PROC accède, via le multiplexeur MXI, aux zones de la mémoire MCO pour initialiser chaque section des zones adressées en particulier S₂, S₃ et S₄. Pour ce faire, il place, pendant le temps t₄ de la base de temps BT, sur l'entrée du multiplexeur MXII, l'adresse de la zone de la mémoire MCO à initialiser. Il fournit un signal de sélection sur l'entrée de commande ec du multiplexeur MXI et, par l'intermédiaire de celui-ci et via son bus D, il fournit aux entrées e₁ à e₄ de la mémoire MCO et pour chaque zone de la mémoire MCO adressée et pour la section S₁ à S₄ sélectionnée, les valeurs d'initialisation de tde, pm, dm et P des circuits virtuels correspondants. Les bits de péremption P de tous les circuits virtuels sont, au départ, comme on le verra par la suite, positionnés à zéro. On comprendra également que l'initialisation de la section S₁, contenant tde n'est pas nécessaire dans le cadre de la présente invention.

En fonctionnement normal, lorsqu'une cellule arrive, à l'heure locale t donnée par la base de temps BT, le numéro du circuit virtuel de cette cellule est fourni, aux temps t₁ et t₂ de la base de temps BT et via le multiplexeur MXII, à l'entrée d'adressage Ad de la mémoire MCO.

Au temps t₁, les valeurs tde, pm, dm, et P correspondant à ce circuit virtuel sont délivrées à l'unité de calcul UC. Sur la base de ces signaux, l'unité de calcul UC, selon une méthode décrite ci-dessous, décide du rejet ou non de la cellule entrante en délivrant le signal Rej correspondant et calcule l'heure fictive d'émission de cette cellule tdes.

Lorsqu'il y a rejet, la sortie Rej de l'unité de calcul UC passe à un niveau 1, si bien que les niveaux de sortie de la porte ET, sont nuls. Chaque bit de la cellule n'est donc pas recopié sur le multiplex de sortie XS, et on dira que la cellule n'est pas émise.

Par contre, lorsqu'il n'y a pas rejet, la sortie Rej de l'unité de calcul UC est à un niveau zéro si bien que la cellule entrante est recopiée sur le multiplex sortant XS; elle est dite émise.

Au temps t₂, la même zone de la mémoire MCO est adressée. La mémoire MCO est en mode écriture et reçoit, via le multiplexeur MXI, le signal tdes que l'unité de calcul UC vient de calculer. Cette valeur est enregistrée dans la section correspondante S₁ de la zone adressée.

Pendant les temps t₃ et t₄,. le processeur PROC traite le bit de péremption P. Cette opération est décrite ci-après.

Pour l'instant, on décrira l'unité de calcul UC en relation avec la Fig. 2 qui en donne un schéma synoptique.

Elle comporte un premier additionneur ADD1 à deux entrées e₁ et e ₂ respectivement reliées à l'entrée tde et l'entrée pm de l'unité UC elles-mêmes respectivement reliées aux sorties s₁ et s₂ de la mémoire MCO.

Elle comporte également un second additionneur ADD2 à deux entrées e₁ et e₂ respectivement reliées à l'entrée t et à l'entrée dm de l'unité UC elles-mêmes respectivement reliées à la sortie t de la base de temps BT et à la sortie s₃ de la mémoire MCO.

La sortie s₁ du premier additionneur ADD1 et la sortie s₂ du second additionneur ADD2 sont respectivement reliées aux entrées e₁ et e₂ d'un premier circuit d'analyse et correction de passage par zéro CACPZ1 dont les deux sorties s₁ et s₂ correspondant à ces deux entrées e₁ et e₂ sont respectivement reliées aux entrées e₁ et e₂ d'un premier comparateur CMP1. La sortie s₁ de ce dernier est reliée à la sortie Rej de l'unité de calcul UC.

La sortie s₁ du premier additionneur ADD1 est reliée à l'entrée e₁ d'un second circuit d'analyse et de correction de passage par zéro CACPZ2 dont l'autre entrée e₂ est reliée à l'entrée t de l'unité UC. Les sorties s₁ et s₂ correspondant aux entrées e₁ et e₂ du circuit CACPZ2 sont respectivement reliées aux deux entrées e₁ et e₂ d'un comparateur CMP2 dont la sortie s₂ est reliée à une première entrée d'une porte OU. La seconde entrée e₂ est reliée à l'entrée P de l'unité de calcul UC, entrée reliée à la sortie s₄ de la mémoire MCO.

La structure et le fonctionnement des circuits CACPZ1 et CACPZ2 sont décrits ci-après. Pour l'instant, on pourra retenir que le signal sur une entrée eᵢ se retrouve normalement à la sortie sᵢ correspondante et qu'ils permettent de résoudre les problèmes qui sont liés au passage par zéro de l'un des signaux présents sur leurs entrées e₁ ou e₂.

Le comparateur CMP1 est tel qu'il délivre sur sa sortie s₁ un bit à zéro lorsque la valeur du signal sur son entrée e₁ est inférieure à celle sur la seconde entrée e₂, et un bit à un lorsque la valeur sur la première entrée e₁ est supérieure à celle sur la seconde entrée e₂.

Quant au comparateur CMP2, il délivre un bit à zéro lorsque la valeur du signal sur son entrée e₁ est supérieure à celle sur la seconde entrée e₂, et un bit à un lorsque la valeur sur la première entrée e₁ est inférieure à celle sur la seconde entrée e₂.

La sortie s₁ du premier additionneur ADD1 est encore reliée à une première entrée e₁ d'un multiplexeur MX1 comportant une seconde entrée e₂ reliée à l'entrée tde de l'unité UC. La sortie s₁ du comparateur CMP1 est encore reliée à l'entrée de sélection es du multiplexeur MX1. La sortie s du multiplexeur MX1 est reliée à l'entrée e₁ d'un second multiplexeur MX2 dont l'autre entrée e₂ reçoit le signal d'horloge t issu de la base de temps BT. Ce second multiplexeur MX2 a son entrée de sélection es qui est pilotée par la sortie de la porte OU.

La sortie s du multiplexeur MX2 est reliée à la sortie tdes de l'unité de calcul UC, sur laquelle est présent le signal de même nom représentant l'heure fictive d'émission de la cellule en cours de traitement.

Le fonctionnement de l'unité de calcul UC est le suivant.

Le premier additionneur ADD1 calcule une heure fictive d'émission de la cellule entrante, heure qui correspond à l'heure fictive d'émission tde de la dernière cellule émise additionnée à la période minimale pm. Quant à l'additionneur ADD2, il calcule une heure qui correspond à l'heure locale d'arrivée de la cellule entrante t additionnée au délai maximum dm. Cette heure est dite heure seuil car une cellule qui aurait une heure fictive d'émission postérieure à cette heure ne serait pas réémise.

On considèrera, dans un premier temps, que les heures calculées par les deux additionneurs ADD1 et ADD2 sont exprimées en des chiffres ayant un même ordre de grandeur. Le circuit CACPZ1 délivre alors respectivement sur ses sorties s₁ et s₂ les signaux présents sur ses entrées e₁ et e₂.

On ne se préoccupe pas non plus pour l'instant du traitement des péremptions. Le bit P est considéré comme étant à zéro, et le multiplexeur MX2 délivre alors sur sa sortie s et fournit, par conséquent, à la sortie tdes de l'unité de calcul UC, le signal qui est présent sur son entrée e₁, c'est-à-dire le signal qui est sur la sortie s du multiplexeur MX1.

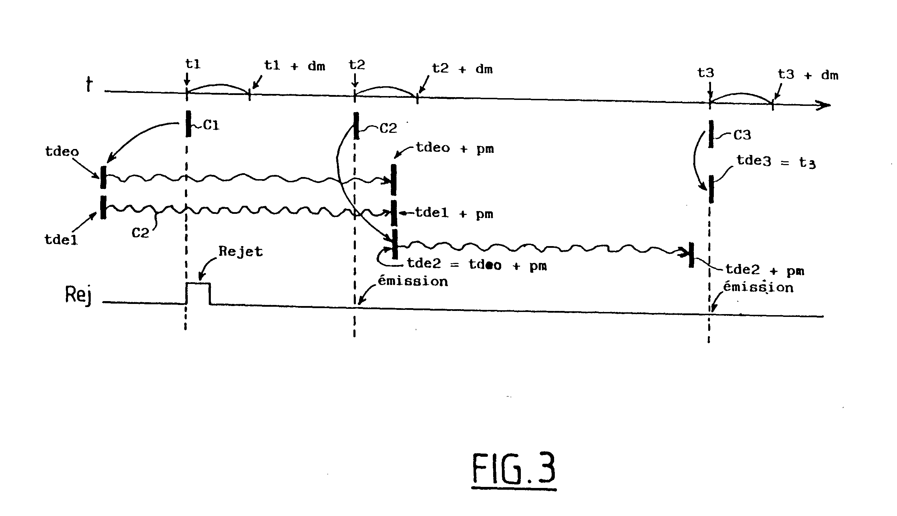

Considérons d'abord le cas d'une cellule C1 (Fig. 3) arrivant à un temps t₁ et dont l'heure fictive d'émission devrait être tdeₒ + pm supérieure à son heure seuil t₁ + dm. Le comparateur CMP1 délivre sur sa sortie s₁ un niveau un qui est fourni, d'une part, à l'entrée de commande ec de la porte ET qui délivre alors un signal de valeur nulle sur le multiplex de sortie XS (voir Fig. 1) et, d'autre part, à l'entrée de sélection es du multiplexeur MX1 qui délivre alors sur sa sortie s l'heure tde. La cellule en cours de traitement n'est donc pas réémise et son heure fictive d'émission tdes est en réalité égale à celle de la dernière cellule précédente tde. (tde₀ = tde₁)

Ainsi, en cas de rejet de la cellule entrante, l'heure fictive d'émission est inchangée et reste tde. Tout se passe vu du multiplex de sortie XS comme si cette cellule entrante n'avait pas existée.

Considérons maintenant le cas d'une cellule C2 arrivant à un temps t₂ et dont l'heure fictive d'émission devrait être tde + pm inférieure à son heure seuil t + dm. Le comparateur CMP1 délivre sur sa sortie s₁ un niveau zéro qui est fourni à l'entrée de commande e_{c} de la porte ET, celle-ci délivre alors sur le multiplex de sortie XS la cellule entrante (Fig. 1). La cellule entrante est donc réémise. Il est également fourni à l'entrée de sélection es d'entrée du multiplexeur MX1 qui délivre alors sur sa sortie s, l'heure tde + pm, qui via le multiplexeur MX2, se retrouve sur la sortie tdes de l'unité de calcul UC. L'heure fictive d'émission de la cellule C2 en cours de traitement et dont on vient de commander l'émission au temps t, est maintenant tde + pm. (tde₂ = tde₁ + pm)

Supposons qu'une cellule C3 arrive à un temps t₃ qui est postérieur à son heure fictive d'émission espérée tde + pm.

Le comparateur CMP2 compare alors l'heure seuil tde + pm délivrée par l'additionneur ADD1 et l'heure t présente sur l'entrée t de l'unité de calcul UC et délivre un niveau un qui est fourni au multiplexeur MX2, via la porte OU. Le multiplexeur MX2 délivre à sa sortie s, non plus l'heure tde ou tde + pm présente à la sortie s du multiplexeur MX1 comme précédemment, mais l'heure t présente sur son entrée e₂. La cellule C3 est alors émise et son heure fictive d'émission est t (tde₃ = t).

On remarquera que lorsque l'heure tde + pm est supérieure à t, le comparateur CMP2 délivre un niveau zéro qui, si le bit P sur l'entrée P de l'unité UC est à zéro, se retrouve sur l'entrée es de commande du multiplexeur MX2. Celui-ci délivre alors tde ou tde + pm.

On va maintenant décrire le fonctionnement des circuits d'analyse et de correction de passage par zéro CACPZᵢ.

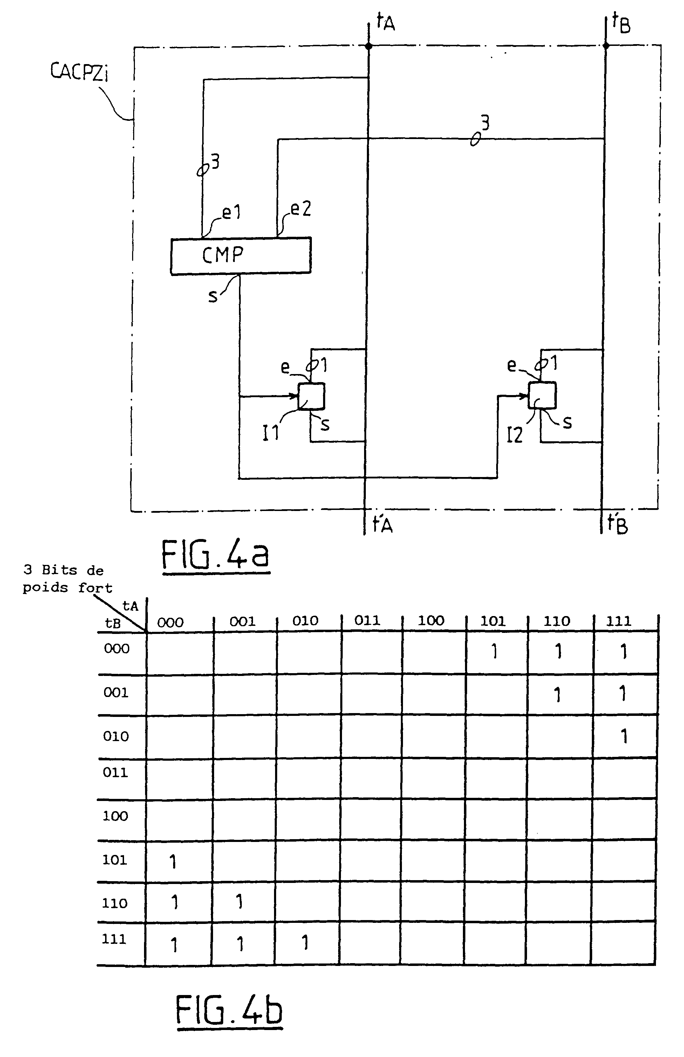

On se reportera à la Fig. 4a qui montre un schéma synoptique d'un tel circuit. Il comprend un comparateur CMP dont les entrées e₁ et e₂ sont respectivement reliées aux fils qui portent les bits de poids les plus forts, d'une part, de l'heure t_{A} et, d'autre part, de l'heure t_{B}. Les trois bits de poids forts peuvent, par exemple, être utilisés.

Pour le circuit CACPZ1, t_{A} et t_{B} sont respectivement les heures tde + pm et t + dm respectivement délivrées par les additionneurs ADD1 et ADD2. Pour le circuit CACPZ2, t_{A} et t_{B} sont respectivement l'heure tde + pm délivrée par l'additionneur ADD1 et l'heure locale t.

Le comparateur CMP fonctionne selon la table de vérité montrée à la Fig. 4b. On peut constater qu'il délivre un niveau un lorsque la distance qui sépare les deux heures t_{A} et t_{B} autour de l'heure de valeur nulle est au plus de trois octants (espace de temps de dimension égale au huitième de la plus grande valeur que peut prendre chaque heure t_{A}, t_{B}). Dans les autres cas, il délivre un zéro.

Le circuit d'analyse CACPZ_{I} montré comporte encore deux inverseurs I₁ et I₂ commandés dont les entrées e sont respectivement reliées aux fils qui portent le bit de poids le plus fort des heures t _{A} et t_{B}. Les sorties s des inverseurs I₁ et I₂ sont respectivement reliées aux fils qui portent le bit de poids le plus fort des heures t'_{A} et t'_{B}, heures délivrées en sortie du circuit d'analyse CACPZᵢ.

Lorsque le comparateur CMP a sa sortie s à un niveau un, les inverseurs I₁ et I₂ inversent respectivement les bits de poids forts des heures t_{A} et t_{B} alors que, lorsqu'il a sa sortie à un niveau zéro, ils n'inversent pas ces bits.

A titre d'exemple, supposons:
t_{A} = 000xxxxxxxxx et t_{B} = 110xxxxxxxxx dans lesquels x représente un bit dont la valeur peut être quelconque.

D'après la table de vérité de la Fig. 4a, le comparateur délivre sur les entrées de commande des inverseurs un niveau 1. Les nouvelles heures sont alors:
t'_{A} = 100xxxxxxxxx et t'_{B} = 010xxxxxxxxx.

On peut constater sur cet exemple que le circuit d'analyse décrit permet de disposer de deux signaux t'_{A} et t'_{B} qui ne sont plus autour de zéro et d'autoriser leur comparaison sans erreur.

Nous allons maintenant décrire l'analyse de la péremption faite par l'unité UC de calcul et aboutissant à l'émission d'un bit de péremption P dont on décrira également la fonction.

Pour l'analyse de la péremption, l'unité de calcul UC comporte (Fig. 2) un circuit d'analyse de la péremption CAP qui possède deux entrées e₁ et e₂ qui reçoivent respectivement l'heure locale t issue de la base de temps BT et l'heure fictive d'émission tde enregistrée dans la zone de la mémoire MCO qui est adressée par le processeur PROC au temps t₃ de la base de temps BT. Le circuit CAP comporte encore une entrée de commande ec reliée à une entrée de commande proc de l'unité de calcul UC sur laquelle le processeur PROC vient placer un bit de commande dont la fonction est explicitée ci-après. Il possède une sortie s connectée à la sortie Pe de l'unité de calcul UC.

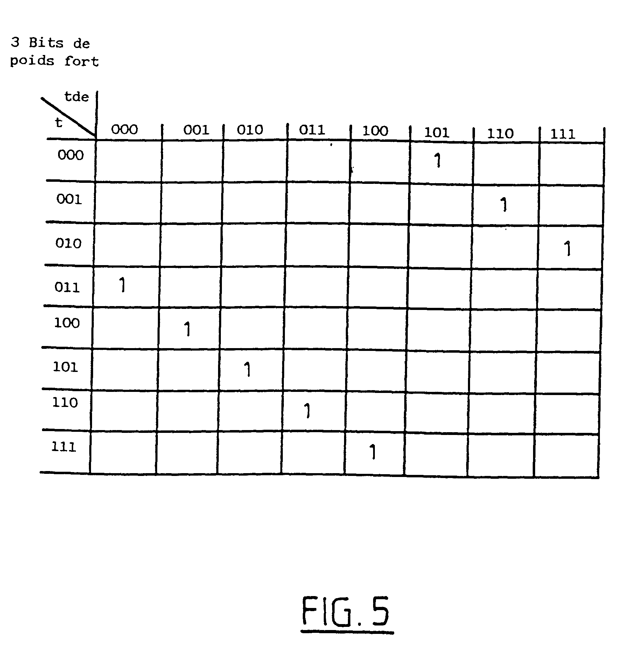

Le circuit CAP fonctionne conformément à la table de vérité de la Fig. 5. On constate que, sur cette Fig. 5, si les trois bits de poids le plus fort du signal t de l'horloge locale sont distants, modulo 2³, de 2² - 1 de l'heure tde, le circuit d'analyse délivre un bit de valeur égale à 1, et, dans le cas contaire, un bit à 0.

On peut constater que le bit P est à un lorsque les temps t et tde ne sont plus comparables, c'est-à-dire lorsque le temps tde pour le circuit virtuel concerné est trop antérieur à l'heure locale t. Il est à zéro dans le cas contraire.

On rappelle que le processeur PROC adresse la mémoire MCO, via le multiplexeur MX1, pendant les temps t₃ et t₄ de la base de temps BT. Pendant le temps t₃, la mémoire MCO est commandée en mode lecture et pendant le temps t₄, la mémoire MCO est en mode écriture.

Pendant les temps t₃ et t₄, le processeur PROC a deux fonctions essentielles à assurer: d'une part, il effectue des opérations, notamment de remise à jour des valeurs pm et dm en cas de modifications de celles-ci pour un circuit virtuel donné, et, d'autre part, il traite le bit de péremption P.

Dans le premier cas, il adresse la mémoire MCO avec le numéro de circuit virtuel dont les valeurs pm et dm sont à modifier et, dans le second cas, avec un signal qui est incrémenté à chaque remise à jour du bit de péremption. Pour différencier des modes de fonctionnement différents, un bit, proc positionné, par le processeur PROC lui-même à zéro dans le premier cas et à un dans le second cas, est fourni au circuit d'analyse de la péremption CAP, si bien que celui-ci est actif seulement dans les cas où le processeur PROC adresse la mémoire MCO en vu du traitement de la péremption.

Toutes les adresses de la mémoire MCO sont à explorer en moins d'un octant de la base de temps BT.

Le bit de péremption P calculé par le circuit d'analyse CAP à partir des valeurs de t et tde de la zone de la mémoire MCO adressée par le processeur PROC est ensuite enregistré dans la section S₄ de la même zone.

Pour le traitement d'une cellule entrante, la fonction du bit de péremption P est la suivante. Le bit P qui est enregistré dans la zone de la mémoire MCO qui est adressée, durant le temps t₁ par une cellule entrante est fourni à l'unité de calcul UC. Dans celle-ci, ce bit est fourni, via la porte OU, à l'entrée de commande es du multiplexeur MX2 (Fig. 2). S'il est à un, c'est-à-dire dans les cas où l'heure seuil tde + pm ne peut être comparée à t, le temps t dont le signal se trouve en sortie s du multiplexeur MX2 est alors considéré comme l'heure d'émission fictive de la dernière cellule émise pour le circuit virtuel considéré. S'il est à zéro, (cas normaux) cette heure fictive d'émission en sortie du multiplexeur MX2 est celle qui est calculée normalement par l'unité de calcul UC.

Enfin, lorsqu'une cellule a été traitée dans le temps t₁, au temps t₂, le bit de péremption P du circuit virtuel de la cellule qui vient d'être émise ou rejetée est repositionné à zéro.

De même, à la mise en route du système, les bits de péremption de tous les circuits virtuels sont positionnés à zéro dans la mémoire MCO.

## Revendications

1. Méthode de contrôle de débit de cellules présentes sur un circuit virtuel d'un multiplex temporel asynchrone d'entrée afin de contrôler le débit de cellules de ce circuit virtuel sur un multiplex de sortie, **caractérisé en ce qu'**on affecte à chaque circuit virtuel une période (pm) correspondant à la période minimale théorique entre deux cellules consécutives dudit circuit virtuel et un délai maximal (dm), on mémorise l'heure fictive d'émission sur le multiplex de sortie de la dernière cellule appartenant à chaque circuit virtuel, et on compare, à l'arrivée d'une nouvelle cellule d'un circuit virtuel, une heure seuil calculée par addition de son heure réelle d'arrivée et dudit délai maximal à l'heure fictive d'émission espérée de ladite nouvelle cellule en cours de traitement, ladite heure étant calculée par addition de ladite heure fictive d'émission de la dernière cellule émise et de ladite période minimale (pm), et si le résultat de cette comparaison montre que ladite heure seuil est antérieure à ladite heure fictive d'émission espérée (tde + pm), ladite cellule entrante n'est pas réémise sur le multiplex de sortie alors que s'il montre que ladite heure seuil est postérieure à l'heure fictive d'émission espérée (tde + pm), elle est émise sur le multiplex de sortie, l'heure fictive d'émission de ladite cellule entrante étant alors calculée puis mémorisée en relation avec le circuit virtuel auquel appartient ladite cellule entrante.

2. Méthode selon la revendication 1, **caractérisée en ce que** l'heure fictive d'émission de la cellule entrante qui est calculée est l'heure réelle d'arrivée (t) si ladite heure d'arrivée est postérieure à ladite heure fictive d'émission espérée (tde + pm).

3. Méthode selon la revendication 1 ou 2, **caractérisée en ce que** l'heure fictive d'émission de la cellule entrante qui est calculée est soit l'heure fictive d'émission de la cellule précédente (tde) si ladite heure seuil (t + dm) est antérieure à ladite heure fictive d'émission espérée (tde + pm), soit ladite heure fictive d'émission espérée (tde + pm) si l'heure seuil (t + dm) est postérieure à ladite heure fictive d'émission (tde + pm).

4. Méthode selon une des revendications précédentes, **caractérisée en ce qu'**on affecte, à chaque circuit virtuel, un bit P dont la valeur est à un lorsque l'heure fictive d'émission (tde) mémorisée pour ledit circuit virtuel est antérieure d'une durée de temps prédéterminée à l'heure réelle (t) et, à zéro, dans le cas contraire.

5. Circuit de contrôle de débit de cellules d'un circuit virtuel pour la mise en oeuvre d'une méthode selon l'une des revendications précédentes, ledit circuit comprenant un multiplex d'entrée (XE) et un multiplex de sortie (XS), **caractérisé en ce qu'**il comprend encore une mémoire (MCO) comportant une zone' de mémorisation par circuit virtuel, chaque zone étant divisée en sections (S1, S2 et S3) dans lesquelles sont respectivement mémorisées l'heure fictive d'émission (tde) de la dernière cellule émise, la période minimale (pm) et la durée maximale de retard (dm) du circuit virtuel correspondant, ladite mémoire (MCO) étant adressée, à l'arrivée d'une cellule entrante sur le multiplex d'entrée (XS), par le numéro du circuit virtuel auquel appartient ladite cellule entrante, une porte (ET) dont l'entrée est reliée au multiplex d'entrée (XE) et dont la sortie est reliée au multiplex de sortie (XS), une unité de calcul (UC) comportant des entrées respectivement reliées aux sorties de lecture de la mémoire (MCO) pour y lire chaque section (S1, S2 et S3) de la zone adressée, une première sortie (Rej) reliée à une entrée de commande de la porte (ET) pour autoriser ou non l'émission sur le multiplex de sortie (XS) de la cellule présente sur le multiplex d'entrée (XE), et une seconde sortie (tdes) reliée à une entrée d'écriture de la mémoire (MCO) pour mémoriser dans la section (S1) de la zone adressée l'heure fictive d'émission (tde) de la cellule entrante calculée par ladite unité de calcul (UC), une base de temps (BT) dont une sortie (t) est reliée à l'entrée correspondante de l'unité de calcul (UC), ladite unité (UC), en fonction de l'heure locale délivrée par ladite base de temps (BT), de l'heure fictive d'émission (tde) de la dernière cellule émise, de la période minimale (pm) et de la durée maximale (dm) respectivement mémorisées dans les sections (S1, S2 et S3) correspondantes de la zone de la mémoire (MCO) qui est adressée par la cellule entrante délivrant un signal sur l'entrée de commande de la porte (ET) pour commander ou non l'émission sur le multiplex de sortie (XS) de ladite cellule et calculant l'heure fictive d'émission (tdes) de ladite cellule entrante pour la mémoriser dans la section (S1) correspondante de la zone adressée par ladite cellule.

6. Circuit selon la revendication 5, **caractérisé en ce que** ladite unité de calcul (UC) comprend un additionneur (ADD1) dont une première entrée et une seconde entrée reçoivent respectivement le signal d'heure fictive d'émission de la dernière cellule émise (tde) et le signal (pm) délivrés par la mémoire (MCO) adressée par le numéro de circuit virtuel de la cellule entrante, la sortie dudit additionneur (ADD1) étant reliée à une première entrée d'un comparateur (CMP1) dont la seconde entrée reçoit le signal d'heure seuil de la cellule entrante (t + dm), la sortie du comparateur (CMP1) étant reliée, d'une part, à la borne de l'unité de calcul (UC) qui est elle-même reliée à l'entrée de commande de la porte (ET) et, d'autre part, à l'entrée de commande d'un multiplexeur (MX1) dont les entrées reçoivent respectivement le signal d'heure fictive d'émission de la dernière cellule émise (tde) délivrée par la mémoire (MCO) et le signal délivré par ledit additionneur (ADD1), la sortie dudit multiplexeur (MX1) étant reliée à la borne (tdes) de l'unité de calcul (UC) elle-même reliée à une entrée d'écriture de la mémoire (MCO) pour la mémorisation de l'heure fictive d'émission de la cellule entrante.

7. Circuit selon la revendication 6, **caractérisé en ce que** pour calculer l'heure seuil de la cellule entrante, l'unité de calcul (UC) comporte encore un second additionneur (ADD2) dont les deux entrées reçoivent respectivement le signal d'heure locale (t) délivrée par la base de temps (BT) et le signal de délai maximal (dm), la sortie dudit additionneur (ADD2) délivrant ledit signal d'heure seuil (t + dm).

8. Circuit selon la revendication 6 ou 7, **caractérisé en ce que** ladite unité de calcul (UC) comporte encore un second comparateur (CMP2) dont une première entrée est reliée à la sortie du premier additionneur (ADD1) et la seconde entrée à la base de temps (BT) pour y recevoir le signal d'heure locale (t), la sortie dudit comparateur (CMP2) étant reliée à l'entrée de commande d'un second multiplexeur (MX2) dont les deux entrées sont respectivement reliées à la sortie du premier multiplexeur (MX1) et à la sortie de la base de temps (BT) pour y recevoir le signal d'heure locale (t), la sortie dudit multiplexeur (MX2) formant alors la sortie de l'unité de calcul (UC).

9. Circuit selon une des revendications 5 à 8, **caractérisé en ce que** chaque comparateur (CMP1, CMP2) a ses entrées qui sont respectivement reliées aux sorties d'un circuit d'analyse et de correction de passage à zéro (CACPZ1, CACPZ2) dont les entrées correspondantes reçoivent les signaux à comparer, ledit circuit (CACPZ1, CACPZ2) inversant le bit de poids le plus fort de chacun des signaux présents sur son entrée lorsqu'un seul desdits signaux est passé par zéro et que l'autre se trouve à une distance prédéterminée du premier.

10. Circuit selon une des revendications 5 à 9, **caractérisé en ce que** l'unité de calcul (UC) comporte encore une entrée pour y recevoir un signal d'activation (Proc) délivré par un processeur (PROC) aux temps où il adresse lui-même ladite mémoire (MCO) et une sortie (Pe) sur laquelle elle délivre un bit P dont la valeur est à un lorsque l'heure fictive d'émission de la dernière cellule émise (tde) mémorisée est antérieure d'une durée de temps prédéterminée à l'heure réelle (t) et à zéro dans le cas contraire, ladite sortie (Pe) étant reliée à une entrée d'écriture de la mémoire (MCO) pour pouvoir mémoriser ledit bit P dans une section (S4) de la zone adressée, la mémoire (MCO) ayant une sortie de lecture pour pouvoir délivrer, à l'arrivée d'une cellule entrante, ledit bit (P) mémorisé dans la section (S4) de la zone adressée par ladite cellule et pour le fournir à une entrée correspondante de l'unité de calcul (UC), ladite unité de calcul (UC) délivrant en tant qu'heure fictive d'émission (tde) de ladite cellule entrante, ladite heure fictive normalement calculée (tde, tde + pm) si le bit (P) mémorisé dans la zone adressée par la cellule entrante est à zéro, et l'heure locale (t) si il est à un.

11. Circuit selon la revendication 10, **caractérisé en ce que** ledit bit (P) est fourni à une entrée d'une porte (OU) dont la seconde entrée est reliée à la sortie du second comparateur (CMP2), la sortie de ladite porte (OU) étant reliée à l'entrée de commande du second multiplexeur (MX2).

## Claims

1. Method of controlling the flow of cells present on a virtual circuit of an input asynchronous time-division multiplex in order to control the flow of cells of this virtual circuit on an output multiplex, **characterised in that** there is allocated to each virtual circuit a period (pm) corresponding to the theoretical minimum period between two consecutive cells of said virtual circuit and a maximum delay (dm), the fictitious transmission time is stored on the output multiplex of the last cell belonging to each virtual circuit, and on the arrival of a new cell of a virtual circuit, a comparison is made of a threshold time calculated by adding its actual time of arrival and said maximum delay to the desired fictitious time of transmission of said new cell being processed, said time being calculated by adding said fictitious time of transmission of the last cell transmitted and said minimum period (pm), and if the result of this comparison shows that said threshold time is earlier than said desired fictitious transmission time (tde + pm), said incoming cell is not retransmitted on the output multiplex whilst if it shows that said threshold time is later than the desired fictitious transmission time (tde + pm), it is transmitted on the output multiplex, the fictitious transmission time of said incoming cell being then calculated then memorised in relation to the virtual circuit to which said incoming cell belongs.

2. Method according to claim 1, **characterised in that** the fictitious transmission time of the incoming cell which is calculated is the actual arrival time (t) if said arrival time is later than said desired fictitious transmission time (tde + pm).

3. Method according to claim 1 or 2, **characterised in that** the fictitious transmission time of the incoming cell which is calculated is either the fictitious transmission time of the preceding cell (tde) if said threshold time (t + dm) is earlier than said desired fictitious transmission time (tde + pm), or said desired fictitious transmission time (tde + pm) if the threshold time (t + dm) is later than said fictitious transmission time (tde + pm).

4. Method according to one of the previous claims, **characterised in that** there is allocated to each virtual cell a bit P, of which the value is at one when the fictitious transmission time (tde) stored for said virtual circuit is earlier by a predetermined period of time than the actual time (t), and at zero in the contrary case.

5. Circuit for controlling the flow of cells of a virtual circuit and for implementing a method according to one of the preceding claims, said circuit comprising an input multiplex (XE) and an output multiplex (XS), **characterised in that** it also comprises a memory (MCO) having one storage area per virtual circuit, each area being divided into sections (S1, S2 and S3) in which are respectively stored the fictitious transmission time (tde) of the last cell transmitted, the minimum period (pm) and the maximum delay time (dm) of the corresponding virtual circuit, said memory (MCO) being addressed, on the arrival of an incoming cell on the input multiplex (XE), by the number of the virtual circuit to which said incoming cell belongs, a gate (AND), the input of which is connected to the input multiplex (XE) and the output of which is connected to the output multiplex (XS), a processing unit (CPU) comprising inputs respectively connected to the read outputs of the memory (MCO) in order to read there each section (S1, S2 and S3) of the area addressed, a first output (Rej) connected to a control input of the gate (AND) to authorise, or not, the transmission on the output multiplex (XS) of the cell present on the input multiplex (XE), and a second output (tdes) connected to a write input of the memory (MCO) to store in the section (S1) of the addressed area the fictitious transmission time (tde) of the incoming cell calculated by said processing unit (CPU), a time base (BT), of which one output (t) is connected to the corresponding input of the processing unit (CPU), said unit (CPU), depending on the local time delivered by said time base (BT), on the fictitious transmission time (tde) of the last cell transmitted, on the minimum period (pm) and on the maximum time (dm) respectively stored in the corresponding sections (S1, S2 and S3) of the memory area (MCO) which is addressed by the incoming cell, delivering a signal on the control input of the gate (AND) to command, or not, the transmission on the output multiplex (XS) of said cell and calculating the fictitious transmission time (tdes) of said incoming cell to store it in the corresponding section (S1) of the area addressed by said cell.

6. Circuit according to claim 5, **characterised in that** said processing unit (CPU) comprises an adder (ADD1), of which a first input and a second input receive respectively the signal of the fictitious transmission time of the last cell transmitted (tde) and the signal (pm) delivered by the memory (MCO) addressed by the virtual circuit number of the incoming cell, the output of said adder (ADD1) being connected to a first input of a comparator (CMP1), of which the second input receives the threshold time signal of the incoming cell (t + dm), the output of the comparator (CMP1) being connected, firstly to the terminal of the processing unit (CPU) which is itself connected to the control input of the gate (AND), and secondly to the control input of a multiplexer (MX1), of which the inputs receive respectively the fictitious transmission time signal of the last cell transmitted (tde) delivered by the memory (MCO) and the signal delivered by said adder (ADD1), the output of said multiplexer (MX1) being connected to the terminal (tdes) of the processing unit (CPU), itself connected to a write input of the memory (MCO) for storing the fictitious transmission time of the incoming cell.

7. Circuit according to claim 6, **characterised in that,** in order to calculate the threshold time of the incoming cell, the processing unit (CPU) comprises also a second adder (ADD2), the two inputs of which receive respectively the local time signal (t) delivered by the time base (BT) and the maximum delay signal (dm), the output of said adder (ADD2) delivering said threshold time signal (t + dm).

8. Circuit according to claim 6 or 7, **characterised in that** said processing unit (CPU) comprises also a second comparator (CMP2), of which a first input is connected to the output of the first adder (ADD1) and the second input to the time base (BT) in order to receive there the local time signal (t), the output of said comparator (CMP2) being connected to the control input of a second multiplexer (MX2), of which the two inputs are respectively connected to the output of the first multiplexer (MX1) and to the output of the time base (BT) in order to receive there the local time signal (t), the output of said multiplexer (MX2) forming then the output of the processing unit (CPU).

9. Circuit according to one of claims 5 to 8, **characterised in that** each comparator (CMP1, CMP2) has its inputs which are respectively connected to the outputs of a circuit for analysing and correcting zero crossover (CACPZ1, CACPZ2), the corresponding inputs of which receive the signals to be compared, said circuit (CACPZ1, CACPZ2) inverting the most significant bit of each of the signals present on its input when a single one of said signals has gone through zero and the other is located at a predetermined distance from the first.

10. Circuit according to one of claims 5 to 9, **characterised in that,** the processing unit (CPU) comprises also an input to receive there an activation signal (Proc) delivered by a processor (PROC) at the times when it itself addresses said memory (MCO) and an output (Pe) on which it delivers a bit P, the value of which is at one when the stored fictitious transmission time of the last cell transmitted (tde) is earlier by a predetermined period of time than the actual time (t), and at zero in the contrary case, said output (Pe) being connected to a write input of the memory (MCO) in order to be able to store said bit P in a section (S4) of the addressed area, the memory (MCO) having a read output in order to be able to deliver, on the arrival of an incoming cell, said bit (P) stored in the section (S4) of the area addressed by said cell and in order to supply it to a corresponding input of the processing unit (CPU), said processing unit (CPU) delivering as the fictitious time of transmission (tde) of said incoming cell, the said fictitious time normally calculated (tde, tde + pm) if the bit (P) stored in the area addressed by the incoming cell is at zero, and the local time (t) if it is at one.

11. Circuit according to claim 10, **characterised in that** said bit (P) is provided to an input of a gate (OR) of which the second input is connected to the output of the second comparator (CMP2), the output of said gate (OR) being connected to the control input of the second multiplexer (MX2).

## Patentansprüche

1. Verfahren zur Flußsteuerung von Zellen, die auf einer virtuellen Schaltung eines asynchronen Zeitmultiplexes vorhanden sind, um die Zellenflußmenge dieser virtuellen Schaltung auf einem Ausgangsmultiplex zu steuern, **dadurch gekennzeichnet, daß** jeder virtuellen Schaltung ein Zeitraum (pm), der dem minimalen theoretischen Zeitraum zwischen zwei aufeinanderfolgenden Zellen der virtuellen Schaltung entspricht, und eine maximale Frist (dm) zugeteilt werden, daß die fiktive Sendezeit auf dem Ausgangsmultiplex der letzten Zelle, die jeder virtuellen Schaltung angehört, gespeichert wird und beim Eintreffen einer neuen Zelle einer virtuellen Schaltung eine Schwellenzeit, die durch Addition ihrer tatsächlichen Ankunftszeit und der maximalen Frist berechnet wurde, mit der fiktiven erhofften Sendezeit der neuen in Bearbeitung befindlichen Zelle verglichen wird, wobei die fiktive Zeit durch Addition der fiktiven Sendezeit der letzten entsandten Zelle und der minimalen Zeitdauer (pm) berechnet wird, und wenn das Resultat dieses Vergleichs zeigt, daß die Schwellenzeit vor der fiktiven erhofften Sendezeit (tde + pm) liegt, die eingehende Zelle nicht wieder auf dem Ausgangsmultiplex entsandt wird, während, wenn sich herausstellt, daß die Schwellenzeit nach der fiktiven erhofften Sendezeit (tde + pm) liegt, diese auf dem Ausgangsmultiplex entsandt wird, wobei die fiktive Sendezeit der eingehenden Zelle nun berechnet und sodann in Verbindung mit der virtuellen Schaltung, der die eingehende Zelle angehört, gespeichert wird.

2. Verfahren nach Anspruch 1, **dadurch gekennzeichnet, daß** die fiktive Sendezeit der eingehenden Zelle, die berechnet wurde, die tatsächliche Ankunftszeit (t) ist, wenn die Ankunftszeit nach der fiktiven erhofften Sendezeit (tde + pm) liegt.

3. Verfahren nach Anspruch 1 oder 2, **dadurch gekennzeichnet, daß** die fiktive Sendezeit der eingehenden Zelle, die berechnet wurde, entweder die fiktive Sendezeit der vorhergehenden Zelle (tde), wenn die Schwellenzeit (t + dm) vor der fiktiven erhofften Sendezeit (tde + pm) liegt, oder die fiktive erhoffte Sendezeit (tde + pm) ist, wenn die Schwellenzeit (t + dm) nach der fiktiven Sendezeit (tde + pm) liegt.

4. Verfahren nach einem der vorhergehenden Ansprüche, **dadurch gekennzeichnet, daß** jeder virtuellen Schaltung ein Bit P zugeteilt wird, dessen Wert bei Eins liegt, wenn die gespeicherte fiktive Sendezeit (tde) für die virtuelle Schaltung um eine vorbestimmte Zeitdauer vor der tatsächlichen Zeit (t) liegt, und im umgekehrten Fall gleich Null ist.

5. Schaltung zur Zellenflußsteuerung einer virtuellen Schaltung für den Einsatz eines Verfahrens nach einem der vorhergehenden Ansprüche, wobei die Schaltung ein Eingangsmultiplex (XE) und ein Ausgangsmultiplex (XS) umfaßt und **dadurch gekennzeichnet ist, daß** sie auch einen Speicher (MCO) besitzt, umfassend eine Speicherzone pro virtueller Schaltung, wobei jede Zone in Abschnitte (S1, S2 und S3) unterteilt ist, in denen die fiktive Sendezeit (tde) der letzten entsandten Zelle, die minimale Zeitdauer (pm) bzw. die maximale Dauer der Verzögerung (dm) der entsprechenden virtuellen Schaltung gespeichert werden, wobei der Speicher (MCO) beim Eintreffen einer eingehenden Zelle auf dem Eingangsmultiplex (XS) durch die Nummer der virtuellen Schaltung adressiert wird, der die eingehende Zelle angehört, ein Tor (ET), dessen Eingang mit dem Eingangsmultiplex (XE) verbunden ist und dessen Ausgang mit dem Ausgangsmultiplex (XS) verbunden ist, eine Recheneinheit (UC), die Eingänge umfaßt, die mit den Leseausgängen des Speichers (MCO) verbunden sind, um darin jeden Abschnitt (S1, S2 und S3) der adressierten Zone abzulesen, einen ersten Ausgang (Rej), der mit einem Steuereingang des Tors (ET) verbunden ist, um die Entsendung der auf dem Eingangsmultiplex (XE) vorhandenen Zelle auf dem Ausgangsmultiplex (XS) zu genehmigen oder nicht, und einen zweiten Ausgang (tdes), der mit einem Schreibeingang des Speichers (MCO) verbunden ist, um in dem Abschnitt (S1) der adressierten Zone die fiktive Sendezeit (tde) der eingehenden Zelle zu speichern, die von der Recheneinheit (UC) berechnet wurde, eine Zeitbasis (BT), deren Ausgang (t) mit dem entsprechenden Eingang der Recheneinheit (UC) verbunden ist, wobei die Einheit (UC) in Abhängigkeit von der Lokalzeit, die von der Zeitbasis (BT) geliefert wird, von der fiktiven Sendezeit (tde) der letzten entsandten Zelle, der minimalen Zeitdauer (pm) und der maximalen Dauer (dm), die jeweils in den entsprechenden Abschnitten (S1, S2 und S3) der Speicherzone (MCO) gespeichert sind, die von der eingehenden Zelle adressiert wird, ein Signal am Steuereingang des Tors (ET) liefert, um die Entsendung der Zelle auf dem Ausgangsmultiplex (XS) zu steuern oder nicht, und die fiktive Sendezeit (tdes) der eingehenden Zelle berechnet, um diese in dem entsprechenden Abschnitt (S1) der von der Zelle adressierten Zone zu speichern.

6. Schaltung nach Anspruch 5, **dadurch gekennzeichnet, daß** die Recheneinheit (UC) ein Addierwerk (ADD1) umfaßt, dessen erster Eingang und zweiter Eingang das Signal der fiktiven Sendezeit der letzten entsandten Zelle (tde) bzw. das Signal (pm) der minimalen Zeitdauer, die von dem von der Nummer der virtuellen Schaltung der eingehenden Zelle adressierten Speicher (MCO) geliefert wurde, empfangen, wobei der Ausgang des Addierwerks (ADD1) mit einem ersten Eingang eines Komparators (CMP1) verbunden ist, dessen zweiter Eingang das Signal der Schwellenzeit der eingehenden Zelle (t + dm) empfängt, wobei der Ausgang der Komparators (CMP1) einerseits mit der Klemme der Recheneinheit (UC) verbunden ist, die selbst mit dem Steuereingang des Tors (ET) verbunden ist, und andererseits mit dem Steuereingang eines Multiplexers (MX1) verbunden ist, dessen Eingänge das Signal der fiktiven Sendezeit der letzten entsandten Zelle (tde), die von dem Speicher (MCO) geliefert wurde, bzw. das von dem Addierwerk (ADD1) gelieferte Signal empfangen, wobei der Ausgang des Multiplexers (MX1) mit der Klemme (tdes) der Recheneinheit (UC) verbunden ist, welche selbst mit dem Schreibeingang des Speichers (MCO) zur Speicherung der fiktiven Sendezeit der eingehenden Zelle verbunden ist.

7. Schaltung nach Anspruch 6, **dadurch gekennzeichnet, daß** die Recheneinheit (UC) zur Berechnung der Schwellenankunftszeit der eingehenden Zelle noch ein zweites Addierwerk (ADD2) umfaßt, dessen beiden Eingänge das lokale Zeitsignal (t), das von der Zeitbasis (BT) geliefert wurde, bzw. Signal der maximalen Frist (dm) empfangen, wobei der Ausgang des Addierwerks (ADD2) das Signal der Schwellenzeit (t + dm) liefert.

8. Schaltung nach Anspruch 6 oder 7, **dadurch gekennzeichnet, daß** die Recheneinheit (UC) noch einen zweiten Komparator (CMP2) umfaßt, dessen erster Eingang mit dem Ausgang des ersten Addierwerks (ADD1) und dessen zweiter Eingang mit der Zeitbasis (BT) verbunden ist, um hier das Lokalzeitsignal (t) zu empfangen, wobei der Ausgang des Komparators (CMP2) mit dem Steuereingang eines zweiten Multiplexers (MX2) verbunden ist, dessen beiden Eingänge mit dem Ausgang des ersten Multiplexers (MX1) bzw. dem Ausgang der Zeitbasis (BT) verbunden sind, um hier das Lokalzeitsignal (t) zu empfangen, wobei der Ausgang des Multiplexers (MX2) nun den Ausgang der Recheneinheit (UC) bildet.

9. Schaltung nach einem der Ansprüche 5 bis 8, **dadurch gekennzeichnet, daß** jeder Komparator (CMP1, CMP2) Eingänge aufweist, die jeweils mit den Ausgängen einer Schaltung zur Analyse und Durchgangskorrektur durch Null (CACPZ1, CACPZ2) verbunden sind, deren entsprechenden Eingänge die zu vergleichenden Signale empfangen, wobei die Schaltung (CACPZ1, CACPZ2) das höchstwertige Bit jedes der an ihrem Eingang vorhandenen Signale umkehrt, wenn ein einziges dieser Signale durch Null verlaufen ist und sich das andere in einem vorbestimmten Abstand zum ersten befindet.

10. Schaltung nach einem der Ansprüche 5 bis 9, **dadurch gekennzeichnet, daß** die Recheneinheit (UC) noch einen Eingang aufweist, um hier ein Aktivierungssignal (Proc) zu empfangen, das von einem Prozessor (PROC) zu der Zeit geliefert wird, zu der er selbst den Speicher (MCO) adressiert, und einen Ausgang (Pe), an den sie ein Bit P liefert, dessen Wert gleich eins ist, wenn die fiktive Sendezeit der letzten gespeicherten ausgesandten. Zelle (tde) um eine vorbestimmte Zeitdauer vor der tatsächlichen Zeit (t) liegt, und gleich Null im umgekehrten Fall, wobei der Ausgang (Pe) mit einem Schreibeingang des Speichers (MCO) verbunden ist, um das Bit (P) in einem Abschnitt (S4) der adressierten Zone speichern zu können, wobei der Speicher (MCO) einen Leseausgang aufweist, um bei Eintreffen einer Zelle das Bit (P) liefern zu können, das in dem Abschnitt (S4) der von der Zelle adressierten Zone gespeichert ist, und um es an einen entsprechenden Eingang der Recheneinheit (UC) zu liefern, wobei die Recheneinheit (UC) als fiktive Sendezeit (tde) der eintreffenden Zelle die normal berechnete fiktive Zeit (tde, tde + pm) liefert, wenn das in der von der eintreffenden Zelle adressierten Zone gespeicherte Bit (P) gleich Null ist, und die Lokalzeit (t), wenn es gleich Eins ist.

11. Schaltung nach Anspruch 10, **dadurch gekennzeichnet, daß** das Bit (P) an einen Eingang mit einer Tor (OU) geliefert wird, dessen zweiter Eingang mit dem Ausgang des zweiten Komparators (CMP2) verbunden ist, wobei der Ausgang des Tors (OU) mit dem Steuereingang des zweiten Multiplexers (MX2) verbunden ist.
